# EUROPÄISCHE PATENTSCHRIFT

(11) **EP 3 209 996 B1**
(45) Veröffentlichungstag und Bekanntmachung des Hinweises auf die Patenterteilung: **13.11.2019**
(21) Anmeldenummer: 15804737.3
(22) Anmeldetag: 02.12.2015
(51) Int. Cl.: G01M 17/08, B61L 27/00

(54) **VERFAHREN UND VORRICHTUNG ZUR AUSFÜHRUNG EINES TESTVORGANGS BETREFFEND EIN SCHIENENFAHRZEUG**
METHOD AND DEVICE FOR CARRYING OUT A TEST PROCESS RELATING TO A RAIL VEHICLE
PROCÉDÉ ET DISPOSITIF DE MISE EN OEUVRE D'UN PROCESSUS DE TEST SUR UN VÉHICULE FERROVIAIRE

(30) Priorität: 23.12.2014 DE 102014226910
(43) Veröffentlichungstag der Anmeldung: 30.08.2017
(73) Patentinhaber: Siemens Mobility GmbH, 81739 München (DE)
(72) Erfinder: FISCHER, Harald, 90762 Fürth (DE)
(86) Internationale Anmeldenummer: PCT/EP2015/078312
(87) Internationale Veröffentlichungsnummer: WO 2016/102160

(56) Entgegenhaltungen:
- WO-A2-2014/044484
- US-A- 5 445 347
- US-A1- 2009 173 839

## Beschreibung

Die Erfindung betrifft ein Verfahren zur Ausführung eines Testvorgangs betreffend ein Schienenfahrzeug.

Der Betrieb von Schienenfahrzeugen ist heutzutage durch immer schärfere Sicherheitsanforderungen geprägt. Außerdem bestehen weitere Anforderungen der Bahnbetreiber, welche - um Kosten in Verbindung mit Betriebsausfällen und Ausfallreparaturen zu reduzieren - geringe Ausfallquoten, große Wartungsintervalle und kurze Servicezeiten verlangen. Um diesen Anforderungen Rechnung zu tragen werden redundante Systeme oder spezielle Architekturen für die Schienenfahrzeuge entwickelt.

US 5,445,347 beschreibt ein automatisiertes Überwachungssystem für eine prädiktive Wartung eines Fahrzeugs, beispielsweise eines Schienenfahrzeugs. Dabei werden Daten an festen Stationen, durch die das Schienenfahrzeug fährt, an ein Wartungssteuerungszentrum übertragen. Das Wartungssteuerungszentrum weist einen Computer auf. In einem Speicher gespeicherte Softwareprogramme beinhalten einen Prognoseprozessor.

US 2009/0173839 A1 beschreibt ein Schienenfahrzeug, welches datentechnisch mit einem Firmennetzwerk verbunden ist. Das Firmennetzwerk weist einen zentralen Server mit einem Datenverarbeitungsmodul, einem Datenanalysemodul und einem Ausfertigungsmodul auf. Das Datenverarbeitungsmodul speichert gemessene Daten von einem vorgegebenen Schienenfahrzeug in einer Datenbank. Das Datenanalysemodul ist in der Lage, Vorhersagen zur Temperatur der zu befahrenen Strecke zu treffen.

WO 2014/044484 A2 beschreibt ein Schienenfahrzeug mit mehreren Messeinrichtungen zum Erfassen von Messwerten, insbesondere von Zuständen von Fahrzeugkomponenten des Schienenfahrzeugs. Die Messwerte können mittels eines Senders an ein Kontrollzentrum übertragen werden. Ein Controller dient zum Auswerten der Messwerte mittels eines Algorithmus. Insbesondere werden die Messwerte der Messeinrichtungen nicht an Bord des Schienenfahrzeugs ausgewertet, sondern streckenweise drahtlos an das Kontrollzentrum übertragen. Das Kontrollzentrum umfasst einen Empfänger zum Empfangen der Messwerte vom Schienenfahrzeug. Als Beispiel für einen Algorithmus zur Auswertung von Messwerten wird eine Trendanalyse beschrieben: Anhand eines zeitlichen Verlaufs eines Motorstromes eines Motors zum Öffnen und Schließen einer Tür zum Fahrgastraum des Schienenfahrzeugs wird ein Motorstromverlauf eines zukünftigen Türöffnungszyklus prognostiziert. Zusätzlich kann ein dem Motorstromverlauf zugrundliegender Trend errechnet und ein fehlerhafter Zustand der Tür prognostiziert werden.

Der Erfindung liegt die Aufgabe zugrunde, ein Verfahren der oben genannten Art zu schaffen, bei welchem eine schnell arbeitende, flexible und in einer Fehlerfassung genaue Überwachungsumgebung erreicht werden kann, insbesondere ohne aufwändige System- oder Architekturanpassungen am Schienenfahrzeug.

Hierzu wird vorgeschlagen, dass eine stationäre Steuereinheit und eine Simulationseinheit auf der Landseite bereitgestellt sind, eine Datenverbindung zwischen der stationären Steuereinheit und dem Schienenfahrzeug hergestellt ist, eine Datenverbindung zwischen der stationären Steuereinheit und der Simulationseinheit hergestellt ist und der Testvorgang einen Datenverkehr der stationären Steuereinheit mit dem Schienenfahrzeug und mit der Simulationseinheit umfasst. Hierdurch kann eine Überwachungsumgebung bereitgestellt werden, welche eine schnelle und genaue Fehlererfassung ermöglicht und eine hohe Flexibilität aufweist. Die Flexibilität kann insbesondere dadurch erreicht werden, dass aufgrund des Datenverkehrs mit dem Schienenfahrzeug und der Simulationseinheit eine gegenseitige Beeinflussung der Systeme "Schienenfahrzeug" und "Simulationseinheit" möglich ist. Insbesondere kann in der Form der stationären Steuereinheit eine - vorzugsweise zusammenhängende - Einheit geschaffen werden, die Prozessdaten eines Fahrzeugprozesses und Simulationsdaten der Simulationseinheit, insbesondere simultan - d.h. zumindest während einer gleichen Zeitspanne - behandelt.

Beim Vorliegen eines Fehlers im Betriebsablauf des Schienenfahrzeugs kann mit einer Unterstützung der stationären Steuereinheit durch einen Simulationsprozess ein Fehler schnell und genau erkannt werden. Dies bringt den weiteren Vorteil mit sich, dass Maßnahmen zur Fehlerbehebung schnell und gezielt eingeleitet werden können.

Die stationäre Steuereinheit weist sinnvollerweise zumindest eine Prozessoreinheit, welche zur Ausführung von Testprogrammmodulen vorgesehen ist, und eine Speichereinheit auf, die zur Speicherung der Testprogrammodulen dient. Diese Programmodule gehören zweckmäßigerweise zu einer Software, von welcher eine Version im Schienenfahrzeug installiert ist und die insbesondere zur Ablaufsteuerung von Fahrzeugprozessen im Schienenfahrzeug geschaffen ist.

Für die Herstellung der Datenverbindung zwischen der stationären Steuereinheit und dem Schienenfahrzeug werden übliche, gegen externe Angriffe geschützte Übertragungsprotokolle eingesetzt. Besonders bevorzugt ist diese Datenverbindung redundant aufgebaut.

Erfindungsgemäß weist die Simulationseinheit Fahrzeugkomponenten und eine Simulationsumgebung auf, in welcher die Komponenten eingebettet sind. Die Simulationseinheit dient in einem Simulationsmodus zum Testen der Fahrzeugkomponenten, die in der Simulationsumgebung eingebettet sind, welche die reale Umgebung der entsprechenden Fahrzeugkomponenten im Schienenfahrzeug nachbilden. Die Fahrzeugkomponenten können Hardwarekomponenten - wie z.B. Aktoren oder Steuerungen - und/oder Softwarekomponenten umfassen - wie z.B. Programmmodule einer Steuerung. Dabei bildet die Simulationsumgebung vorzugsweise eine Umgebung, welche in der fachmännischen Sprache "Hardware-in-the-loop" bzw. "Software-in-the-loop" genannt ist. Zur Bildung der Simulationseinheit können herkömmliche Simulationskomponenten, welche Simulationsprogramme und/oder mechanische Simulatoren umfassen, eingesetzt werden. Diese dienen im Simulationsmodus zur Unterstützung der Entwicklung eines neuen Schienenfahrzeugs.

Gemäß der Erfindung werden Prozessdaten eines Fahrzeugprozesses der stationären Steuereinheit übermittelt und die stationäre Steuereinheit eine Auswertung der Prozessdaten anhand von Simulationsdaten eines Simulationsprozesses durchführt. Dadurch kann ein Testmodus der stationären Steuereinheit geschaffen werden, in welchem durch die Prozessdaten des Fahrzeugprozesses ein Ist-Zustand beim Schienenfahrzeug dargestellt ist, vom Simulationsprozess erzeugte Simulationsdaten einen Soll-Zustand beim Schienenfahrzeug darstellen und mit der Auswertung der Prozessdaten des Schienenfahrzeugs und der Simulationsdaten ein Vergleich zwischen dem Ist-Zustand und dem Soll-Zustand durchgeführt wird. In diesem Testmodus kann ein Fehler im Betriebsablauf des Schienenfahrzeugs besonders schnell und genau erfasst werden. Insbesondere kann ein Soll-Ist-Vergleich möglichst in Echtzeit, insbesondere während eines Streckenbetriebs des Schienenfahrzeugs, erzielt werden.

In einer Weiterbildung der Erfindung wird vorgeschlagen, dass Prozessdaten eines Fahrzeugprozesses der stationären Steuereinheit übermittelt werden und die stationäre Steuereinheit eine Änderung von Simulationsdaten der Simulationseinheit anhand der Prozessdaten bewirkt. Dadurch kann ein Anpassungsmodus der stationären Steuereinheit geschaffen werden, welcher zur Anpassung der Simulationseinheit dient und in welchem durch die Prozessdaten des Fahrzeugprozesses ein Ist-Zustand beim Schienenfahrzeug dargestellt ist und die Simulationsdaten an den Ist-Zustand angepasst werden. Dieser Anpassungsmodus kann insbesondere dazu dienen, am Schienenfahrzeug vorgenommene Änderungen oder Änderungen, die sich z.B. durch eine Fehlfunktion einer Fahrzeugkomponente ergeben, für eine Anpassung von Daten der Simulationseinheit zu berücksichtigen. Diese Anpassung von Daten kann insbesondere eine Anpassung von Simulationsparametern, die für die einbettende Simulationsumgebung relevant sind und auf der Grundlage welcher ein Simulationsprozess ausgeführt wird, und/oder eine Anpassung von Programmmodulen, mit welchen eine Simulation ausgeführt wird, umfassen.

Ferner wird vorgeschlagen, dass die stationäre Steuereinheit anhand von Simulationsdaten eines Simulationsprozesses wenigstens einen Fahrzeugprozess zumindest teilweise beeinflusst. Hierdurch kann ein Testmodus der stationären Steuereinheit geschaffen werden, in welchem der Fahrzeugprozess getestet wird. Dieser kann von der stationären Steuereinheit auf der Grundlage von Parametern durchgeführt werden, die mittels des Simulationsprozesses ermittelt und/oder vorgegeben werden. Dabei werden sinnvollerweise dem zumindest teilweisen beeinflussten oder zu beeinflussenden Fahrzeugprozess die Simulationsdaten zugrunde gelegt. Insbesondere kann der Fahrzeugprozess dadurch getestet werden, dass anhand der Simulationsdaten ein Parameter - z.B. ein Inputparameter und/oder ein Bedingungsparameter - des Fahrzeugprozesses diesem vorgegeben wird, wobei dieser Parameter von einem realen Wert im Schienenfahrzeug abweicht. Dadurch können Testbedingungen im Schienenfahrzeug künstlich geschaffen werden, die von realen Bedingungen abweichen.

Unter der "zumindest teilweisen Beeinflussung" eines Prozesses durch die stationäre Steuereinheit soll ein Vorgang verstanden werden, welcher zumindest ein Auslösen, Initiieren, Betätigen, Steuern, Regeln, Ändern und/oder Beenden des Prozesses durch die stationäre Steuereinheit umfasst.

Die zumindest teilweise Beeinflussung erfolgt zweckmäßigerweise mittels einer Steuerverbindung, welche zwischen der stationären Steuereinheit und zumindest einer Steuereinheit des Schienenfahrzeugs mittels der Datenverbindung hergestellt und betrieben wird und insbesondere die Übermittlung von Befehlsdaten der stationären Steuereinheit an die zumindest eine Steuereinheit des Schienenfahrzeugs ermöglicht. Die zumindest eine Steuereinheit des Schienenfahrzeugs kann eine zentrale, lokalen Steuereinheiten, insbesondere lokalen Subsystemsteuerungen, übergeordnete Steuereinheit sein. Beispielsweise kann die zumindest eine Steuereinheit einem zentralen Steuergerät (oder "ZSG") des Schienenfahrzeugs entsprechen. Ist der Fahrzeugprozess ein Prozess eines lokalen Subsystems, kann die Steuerverbindung mit der zentralen Steuereinheit hergestellt sein, welche von der stationären Steuereinheit befohlen wird, den betreffenden lokalen Fahrzeugprozess zumindest teilweise zu beeinflussen. Alternativ kann die Steuerverbindung zwischen der stationären Steuereinheit und der entsprechenden lokalen, zur Ausführung des Fahrzeugprozesses zumindest teilweise zuständigen Steuereinheit hergestellt und betrieben werden, wobei diese Steuerverbindung vorzugsweise über die zentrale Steuereinheit hergestellt wird.

Für die zumindest teilweise Beeinflussung des Fahrzeugprozesses durch die stationäre Steuereinheit dienen vorteilhafterweise deren oben beschriebene Programmmodule einer Software, von welcher eine Version im Schienenfahrzeug installiert ist und die insbesondere zur Ablaufsteuerung von Fahrzeugprozessen vorgesehen ist.

Insbesondere wird vorgeschlagen, dass die Simulationsdaten zumindest einen Fehler im Schienenfahrzeug nachbilden. Dadurch kann eine Fehlerinjektion in zumindest ein Subsystem des Schienenfahrzeugs erfolgen, wodurch eine Reaktion dieses auf den Fehler erfasst und ausgewertet werden kann. Diese Auswertung kann wie oben beschrieben auf der Basis eines Vergleichs eines Ist-Zustands beim Schienenfahrzeug, welcher mit dem Verhalten des Schienenfahrzeugs beim Vorliegen des Fehlers zusammenhängt, mit einem durch die Simulationseinheit ermittelten Soll-Zustand beim Schienenfahrzeug, welcher ein Soll-Verhalten des Schienenfahrzeugs charakterisiert. Durch diesen Testmodus können Fehlsituationen, insbesondere unsicheren Zuständen des Schienenfahrzeugs effizient vorgebeugt werden.

Des Weiteren wird vorgeschlagen, dass Prozessdaten eines Fahrzeugprozesses der stationären Steuereinheit übermittelt werden und die stationäre Steuereinheit ein Ausführen eines Simulationsprozesses anhand der Prozessdaten bewirkt. Dies ist im Rahmen einer Anpassung, insbesondere ein Trainieren der Simulationseinheit vorteilhaft.

In der oben beschriebenen Ausführung, bei welcher die Simulationseinheit Fahrzeugkomponenten und eine Simulationsumgebung aufweist, in welcher die Komponenten eingebettet sind, wird vorgeschlagen, dass die Simulationsumgebung eine Schnittstelle aufweist, über welche eine Datenkommunikation mit einem rechnergestützten Entwicklungssystem hergestellt wird. Unter einer "rechnergestützten Entwicklung" soll eine Unterstützung von Arbeitsprozessen in der Technik verstanden werden, wobei die unterstützten Arbeitsprozesse zumindest die Erstellung eines Designs, insbesondere eines Konstruktionsdesigns (oder "Computer Aided Design", auch "CAD"), die Erstellung einer numerischen Steuerung - auch "NC-Programmierung" (d.h. Programmierung eines "Numerical Controls" oder einer "numerischen Steuerung") genannt - im Rahmen der Fertigung (oder "Computer Aided Manufacturing", auch "CAM") und/oder weitere Prozesse, die allgemein zur rechnergestützten Entwicklung gemäß dem fachmännischen Begriff "Computer Aided Engineering" (auch "CAE") gehören. In der vorgeschlagenen Ausführung, bei welcher Daten eines derartigen Systems der Simulationseinheit übermittelt werden können, können in diesem System erfolgte Änderungen durch die Simulationseinheit automatisch, und vorteilhaft in Echtzeit berücksichtigt werden. Die Datenkommunikation zwischen dem rechnergestützten Entwicklungssystem und der Simulationseinheit kann durch eine Formatumwandlungseinheit unterstützt werden - z.B. in der Form eines "Parsers"- welche zur Schnittstelle gehört.

Die Funktion des rechnergestützten Entwicklungssystems basiert zweckmäßigerweise auf zumindest einem Datensatz von Simulationsdaten aus der Gruppe: Schaltplandaten, Bauteilbibliotheken, Bibliothekdaten für ein Design-Programm.

In diesem Zusammenhang und im Zusammenhang mit der oben beschriebenen Ausführung, bei welcher Prozessdaten eines Fahrzeugprozesses der stationären Steuereinheit übermittelt werden und die stationäre Steuereinheit eine Änderung von Simulationsdaten der Simulationseinheit anhand der Prozessdaten bewirkt, wird vorgeschlagen, dass die Änderung eine Anpassung des zumindest einen Datensatzes anhand der Prozessdaten umfasst. Hierdurch können Änderungen in der Konfiguration des Schienenfahrzeugs, welche anhand der Prozessdaten erfasst werden, im zumindest einen Datensatz des rechnergestützten Entwicklungssystems nachgebildet werden, wodurch eine weitestgehend automatische Aktualisierung der Simulationseinheit erreicht werden kann. Umfasst der Datensatz Schaltplandaten, kann eine weitestgehend automatische Schaltplangenerierung durch die Simulationseinheit erfolgen.

Ferner wird vorgeschlagen, dass der Testvorgang während eines Streckenbetriebs des Schienenfahrzeugs ausgeführt wird. Es kann hierdurch eine umfassende, gezielte und bevorzugt automatische Überwachung des Schienenfahrzeugs während der Fahrt auf einer Strecke erfolgen. Vorzugsweise wird ein Testvorgang ausgeführt, welcher keinerlei Einfluss auf die Sicherheit der Passagiere hat. Insbesondere wird vorzugsweise ein Testvorgang ausgeführt, welcher den Vergleich eines Ist-Zustands beim Schienenfahrzeug mit einem durch die Simulationseinheit ermittelten Soll-Zustand verglichen wird.

Dies ist in Verbindung mit dem Personenschutz vorteilhaft, da durch einen Testvorgang ein unsicherer Zustand des Schienenfahrzeugs besonders vorteilhaft während eines Streckenbetriebs erkannt werden kann. Es können schnell und gezielt Maßnahmen getroffen werden, um das Schienenfahrzeug wieder in einen sicheren Zustand zu bringen. Hierdurch können Safety-Anforderungen, welche Voraussetzungen für eine Fahrzeugzulassung darstellen, erfüllt werden. Unter "Safety-Anforderungen" sollen insbesondere Anforderungen verstanden werden, die in den Normen EN 50128, 50159, 50126 und/oder 50129 definiert sind und insbesondere auf den Personenschutz abzielen.

Insbesondere kann beim Vorliegen eines unsicheren Zustands eine Notbremsung des Schienenfahrzeugs ausgelöst werden.

Die Erfindung betrifft ferner eine Vorrichtung zur Ausführung eines Testvorgangs betreffend ein Schienenfahrzeug. Es wird vorgeschlagen, dass die Vorrichtung mit einer stationären Steuereinheit, einer Simulationseinheit und einer Datenschnittstelle ausgestattet ist, welche auf der Landseite bereitgestellt sind, wobei die stationäre Steuereinheit mit der Simulationseinheit datentechnisch in Wirkverbindung steht und dazu vorgesehen ist, über die Datenschnittstelle eine Datenverbindung mit dem Schienenfahrzeug herzustellen und den Testvorgang auf der Grundlage eines Datenverkehrs mit dem Schienenfahrzeug und mit der Simulationseinheit auszuführen. Hierdurch kann eine Überwachungsumgebung bereitgestellt werden, welche eine schnelle und genaue Fehlererfassung ermöglicht und eine hohe Flexibilität aufweist. Zu vorteilhaften Wirkungen und Ausprägungen der vorgeschlagenen Vorrichtung wird auf die Ausführung oben bezüglich des vorgeschlagenen Verfahrens verwiesen.

Es wird ein Ausführungsbeispiel der Erfindung anhand der Zeichnungen erläutert. Es zeigen:
- Figur 1: ein Schienenfahrzeug in einer schematischen Seitenansicht,
- Figur 2: ein System umfassend das Schienenfahrzeug und eine Testzentrale, welche eine Steuereinheit und eine Simulationseinheit aufweist,
- Figur 3: die Simulationseinheit in einer schematischen Detaildarstellung und
- Figur 4: eine Interaktion zwischen Komponenten des Schienenfahrzeugs und der Steuereinheit der Testzentrale.

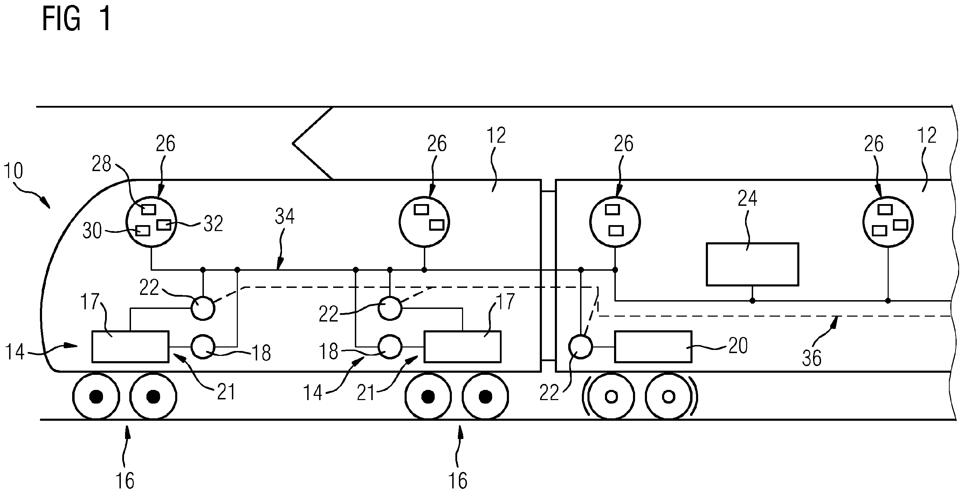

Figur 1 zeigt ein Schienenfahrzeug 10 in einer schematischen Seitensicht. Es ist als Verband von Wagen 12 ausgebildet, die jeweils für den Transport von Passagieren vorgesehen sind, wobei zumindest ein Wagen 12 als Triebwagen ausgebildet ist. Die Ausführung des Schienenfahrzeugs 10 als Triebzug für den Transport von Passagieren ist beispielhaft. Alternativ kann das Schienenfahrzeug als Lokomotive oder als Verband einer Lokomotive mit gekoppelten Reisezugwagen ausgebildet sein.

In der betrachteten Ausführung sind beispielweise die Endwagen als Triebwagen ausgebildet. Ein Triebwagen weist zumindest eine Antriebseinheit 14 auf, welche zumindest einem Triebfahrwerk 16, insbesondere einem Triebdrehgestell zugeordnet und zum Antreiben zumindest einer Triebachse des zugeordneten Triebfahrwerks 16 vorgesehen ist. Das Schienenfahrzeug 10 weist Antriebseinheiten 14 auf, die jeweils zumindest einen Fahrmotor (nicht gezeigt), eine Leistungsversorgungseinheit 17 und ein Antriebssteuergerät 18 aufweisen. Dieses dient zur Steuerung der Leistungsversorgung des Fahrmotors durch die Leistungsversorgungseinheit 17, welche insbesondere als Wechselrichter ausgebildet ist.

Das Schienenfahrzeug 10 weist ferner eine Bremseinrichtung mit einem Satz von Bremseinheiten 20 auf, die insbesondere als pneumatisch betätigbare Reibungsbremsen ausgebildet sind, und als elektrische Motorbremse ausgebildete Bremseinheiten 21 auf, welche vom Satz der Antriebseinheiten 14 gebildet sind. Die Bremseinheiten 20 und 21 werden mittels Bremssteuergeräten 22 gesteuert. Außerdem umfasst das Schienenfahrzeug 10 eine zentrale Steuereinheit 24, welche lokalen Steuerungen, insbesondere den Antriebssteuergeräten 18 und den Bremssteuergeräten 22 übergeordnet ist.

Neben den Antriebseinheiten 14 und der Bremseinrichtung weist das Schienenfahrzeug 10 weitere Subsysteme 26 auf, die jeweils zumindest eine Steuereinheit 28, eine Aktoreinheit 30 und/oder eine Sensoreinheit 32 umfassen. Die Subsysteme 26 und ihre internen Komponenten sind in der Figur stark schematisiert dargestellt.

Die Antriebseinheiten 14, die Bremseinheiten 20, 21 und die weiteren Subsysteme 26 sind an ein Datenbussystem 34 eines Netzwerks des Schienenfahrzeugs 10 angeschlossen. Das Datenbussystem 34 ist schematisch dargestellt und kann mehrere, voneinander unterschiedliche und miteinander datentechnisch verbundene Datenbusse umfassen. Die zentrale Steuereinheit 24 ist ebenfalls an das Datenbussystem 34 angeschlossen, wobei eine Datenkommunikation zur Übertragung von Informationen, Steuerdaten und/oder Sensordaten zwischen einem Subsystem 26 und der zentralen Steuereinheit 24 über das Datenbussystem 34 erfolgt.

Das Schienenfahrzeug 10 umfasst ferner einen Satz von Sicherungsschleifen 36, die jeweils einer Sicherheitsfunktion des Schienenfahrzeugs 10 zugeordnet sind. Ein typisches Beispiel ist dabei eine Notbremsschleife, durch welche eine Notbremsung durch einen Passagier ausgelöst werden kann.

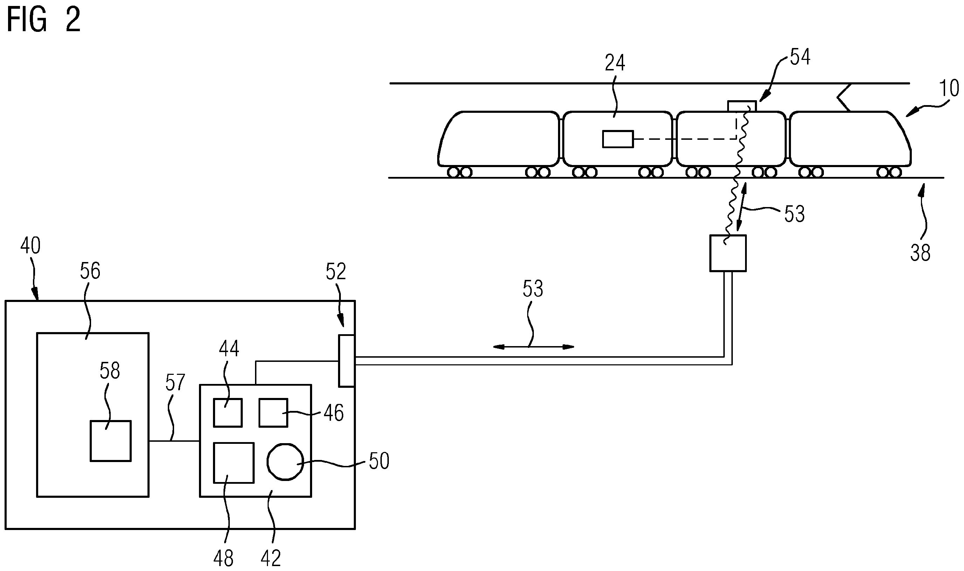

Figur 2 zeigt das Schienenfahrzeug 10 in einer gegenüber Figur 1 vereinfachen Ansicht auf einer Strecke 38 und eine landseitige Testzentrale 40. In dieser Testzentrale befindet sich zumindest eine Steuereinheit 42, welche von einer Person bedienbar ist. Hierzu weist die Steuereinheit 42 zumindest eine Eingabeeinrichtung 44, die zur Eingabe von Daten durch die Person dient, und eine Ausgabeeinrichtung 46 auf, die zur Ausgabe, insbesondere zur zumindest optischen Ausgabe von Daten an die Person vorgesehen ist. Gegenüber der zentralen Steuereinheit 24 des Schienenfahrzeugs 10 ist die Steuereinheit 42 der Testzentrale "stationäre Steuereinheit" genannt. Beispielsweise kann die stationäre Steuereinheit als PC (oder "Personal Computer") ausgebildet sein. Durch Bedienen der stationären Steuereinheit 42 können wie unten beschrieben Testvorgänge beim Schienenfahrzeug 10 ausgeführt werden. Alternativ oder zusätzlich können diese Testvorgänge automatisch ausgeführt werden, d.h. ohne dass ein Bedienen der Steuereinheit 42 notwendig ist, wobei Informationen über den Ablauf und Ergebnisse von Testvorgängen mittels der Ausgabeeinrichtung 46 automatisch ausgegeben werden. Es ist dabei denkbar, dass die Steuereinheit 42 ohne Mensch-Maschine-Schnittstelle, d.h. ohne Eingabe- und Ausgabeeinrichtung ausgebildet ist.

Die stationäre Steuereinheit 42 weist zumindest eine Prozessoreinheit 48 und eine Speichereinheit 50 auf, in welcher Programmmodule zur Ausführung von Testvorgängen durch die Prozessoreinheit 48 gespeichert sind.

Die Testzentrale 40 weist ferner eine Datenschnittstelle 52 auf, über welche eine Datenverbindung 53 mit dem Schienenfahrzeug 10 herstellbar ist. Hierzu umfasst das Schienenfahrzeug 10 eine Datenschnittstelle 54, über welche eine Datenverbindung mit der Datenschnittstelle 52 der Testzentrale 40 herstellbar ist. Die Datenverbindung 53 zwischen den Datenschnittstellen 52 und 54 kann zumindest teilweise kabelgebunden hergestellt werden. Eine zwischen den Datenschnittstellen 52, 54 hergestellte Verbindung dient insbesondere zum Aufbau der Datenverbindung 53 zwischen der stationären Steuereinheit 42 und dem Schienenfahrzeug 10, insbesondere dessen zentraler Steuereinheit 24. Hierzu steht die stationäre Steuereinheit 42 mit der Datenschnittstelle 52 datentechnisch in Wirkverbindung und die zentrale Steuereinheit 24 des Schienenfahrzeugs 10 steht datentechnisch mit der Datenschnittstelle 54 in Wirkverbindung.

Die Testzentrale 40 weist außerdem eine Simulationseinheit 56 auf, durch welche Simulationsprozesse ausgeführt werden. Die stationäre Steuereinheit 42 steht über eine Datenverbindung 57 datentechnisch in Wirkverbindung mit zumindest einer Recheneinheit 58 der Simulationseinheit 56.

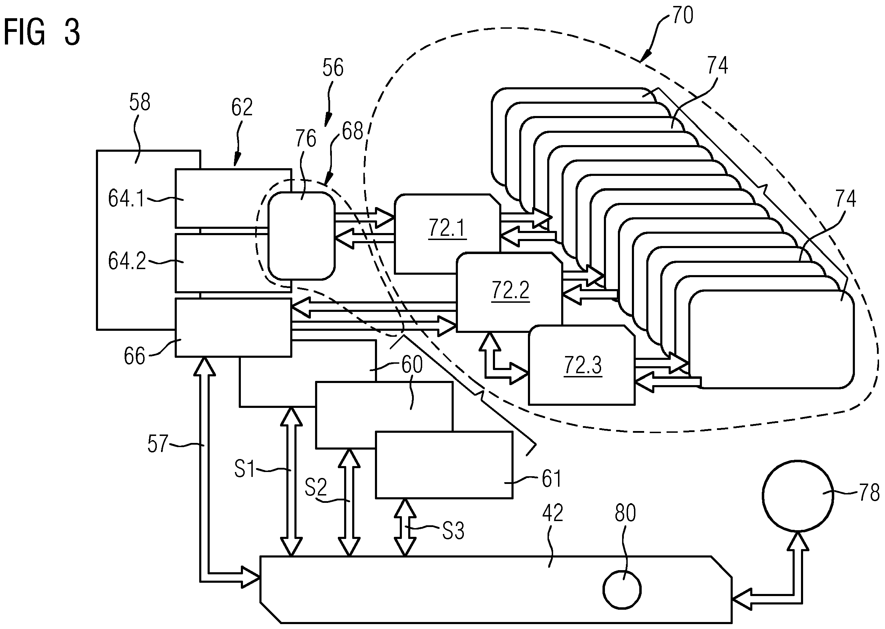

Die Simulationseinheit 56 ist in Figur 3 näher dargestellt. Die Datenverbindung 57 der Simulationseinheit 56 mit der stationären Steuereinheit 42 sowie diese Steuereinheit 42 sind ebenfalls gezeigt. Die Simulationseinheit 56 weist Fahrzeugkomponenten 60 in der Form von Hardware, z.B. Steuergeräten, mechanische Aktoren usw. und/oder von Software, z.B. Steuerprogrammen, Regelprogrammen usw. auf, die in einer Simulationsumgebung 62 eingebettet sind. Die Fahrzeugkomponenten 60 entsprechen realen Komponenten, die im Schienenfahrzeug 10 angeordnet sind. Die Fahrzeugkomponenten 60 können außerdem durch eine Verdrahtung 61 miteinander verbunden werden, welche einer realen Verdrahtung im Schienenfahrzeug 10 entspricht. Die Simulationsumgebung 62 weist einen Satz von Simulationsprogrammen 64.1, 64.2 und mechanische Simulatoren 66 auf, die mittels der Recheneinheit 58 ausführbar bzw. steuerbar sind. In einer Entwicklungsphase sind diese Simulationsprogramme 64 bzw. mechanischen Simulatoren 66 einzeln durch eine Person bedienbar. Die Fahrzeugkomponenten 60, die Verdrahtungen 61 zusammen mit der Simulationsumgebung 62 bilden ein System, welches in der fachmännischen Sprache "Hardware-in-the-loop" (oder "HIL") bzw. "Software-in-the-loop" (oder "SIL") genannt ist. Die Komponenten der Simulationsumgebung 62 dienen dabei dazu, die reale Umgebung der Fahrzeugkomponenten 60 im vom Schienenfahrzeug 10 gebildeten System nachzubilden. Bekannte Simulationsprogramme 64 sind z.B. Labview® oder dSPACE®.

Wie oben beschrieben steht die stationäre Steuereinheit 42 mit der Recheneinheit 58 der Simulationseinheit 56 datentechnisch in Wirkverbindung, wobei die Recheneinheit 58 dazu dient, die Simulationsprogramme 64.1 64.2 auszuführen. Hierzu ist die Recheneinheit 58 mit zumindest einer Prozessoreinheit (nicht gezeigt) ausgestattet.

Die Simulationseinheit 56 weist des Weiteren eine Schnittstelle 68 auf, über welche Daten eines rechnergestützten Entwicklungssystems 70 von der Simulationsumgebung 62 empfangen werden. Das rechnergestützte Entwicklungssystem 70 weist einen Satz von Entwicklungsprogrammen 72.1, 72.2, 72.3 auf, die von entsprechenden Steuereinheiten oder von einer übergeordneten Steuereinheit (nicht gezeigt) ausgeführt werden. Beispielsweise ist das Entwicklungsprogramm 72.1 ein allgemeines CAE-Programm (oder "Computer-aided Engineering"). Das Entwicklungsprogramm 72.2 kann insbesondere ein Design-Programm oder CAD-Programm (oder "Computer-aided Design") sein. Das Entwicklungsprogramm 72.3 kann insbesondere ein Fertigungsprogramm oder CAM-Programm (oder "Computer-aided Manufacturing") sein. Diese Entwicklungsprogramme 72 stehen jeweils mit entsprechenden Datensätzen 74 von Simulationsdaten für einen Zugriff in Verbindung. Diese Datensätze 74 sind dabei insbesondere Schaltplandaten, Bauteilbibliotheken und/oder Bibliothekdaten für das Design-Programm.

Das Entwicklungsprogramm 72.2. steht vorzugsweise in Wirkverbindung mit den mechanischen Simulatoren 66 einerseits und mit dem Entwicklungsprogramm 72.3 andererseits. Das Entwicklungsprogramm 72.1 steht vorzugsweise in Wirkverbindung mit den Simulationsprogrammen 64.1, 64.2 in Wirkverbindung. Der Austausch von Daten zwischen den Simulationsprogrammen 64.1, 64.2 und dem Entwicklungsprogramm 72.1 erfolgt über eine Formatumwandlungseinheit 76 - auch "Parser" genannt - welche zur Schnittstelle 68 gehört.

Die Simulationseinheit 56 weist ferner ein Fahrstreckensimulationsprogramm 78 auf, durch welches Simulationsdaten erzeugt werden, die bei der Ausführung von Simulationsprozessen durch die Simulationsprogramme 64 berücksichtigt werden. Diese Simulationsdaten dienen dazu, bei der Fahrt einer Strecke vorliegende, streckenbezogene Bedingungen nachzubilden, in welchen die Fahrzeugkomponenten 60 gesteuert werden. Die Einbindung dieser Simulationsdaten erfolgt über die stationäre Steuereinheit 42, welche datentechnisch mit dem Fahrstreckensimulationsprogramm 78 steht.

Gemäß einem ersten, als reiner Simulationsmodus ausgebildeten Testmodus der stationären Steuereinheit 42 werden in einem Simulationsprozess der Simulationseinheit 56 die in der Simulationsumgebung 62 eingebetteten Fahrzeugkomponenten 60 gesteuert. Diese Steuerung erfolgt insbesondere durch die stationäre Steuereinheit 42 über die Recheneinheit 58, welche zumindest ein Simulationsprogramm mit einer HIL- und/oder SIL-Funktion ausführt. Die Ansteuerung der Fahrzeugkomponenten 60 durch die stationäre Steuereinheit 42 ist in Figur 3 mittels Pfeilen S1 und S2 schematisch dargestellt, welche zwischen der Steuereinheit 42 und den Komponenten 60 hergestellte Steuerverbindungen bezeichnen. Über eine weitere, ebenfalls stark schematisch dargestellte Steuerverbindung S3 erfolgt eine Betätigung von Elementen der Verdrahtung 61 durch die Steuereinheit 42. Beispielsweise können Drahtverbindungen aktiviert oder deaktiviert werden, um z.B. einen Leitungsbruch zu simulieren. Es erfolgt in diesem Modus ein Datenverkehr zwischen der stationären Steuereinheit 42 und der Simulationseinheit 56, bei welchem Steuerdaten von der Steuereinheit 42 zur Ausführung eines Simulationsprozesses an die Simulationseinheit 56 übertragen werden und von einem Simulationsprozess erzeugte Simulationsdaten an die Steuereinheit 42 übermittelt werden.

Bei der Ausführung des Simulationsmodus können auch die von dem Fahrstreckensimulationsprogramm 78 erzeugten Simulationsdaten berücksichtigt werden. Das Simulationsprogramm mit HIL- und/oder SIL-Funktion zieht wie oben beschrieben Simulationsdaten des rechnergestützten Entwicklungssystems 70 heran. Der Simulationsmodus der Steuereinheit 42 wird insbesondere auf der Basis einer Software 80 ausgeführt, mit welcher die stationäre Steuereinheit 42 ausgestattet ist und die einer entsprechenden, realen Steuersoftware des Schienenfahrzeugs 10 entspricht, welche z.B. durch eine reale Steuerung des Schienenfahrzeugs 10 in dessen Betrieb ausgeführt wird. Die Software 80 ist in der Speichereinheit 50 hinterlegt.

Ein im Simulationsmodus ausgeführter Simulationsprozess erzeugt Simulationsdaten, welche über die Datenverbindung 57 von der stationären Steuereinheit 42 ausgewertet und/oder zur späteren Auswertung gespeichert werden.

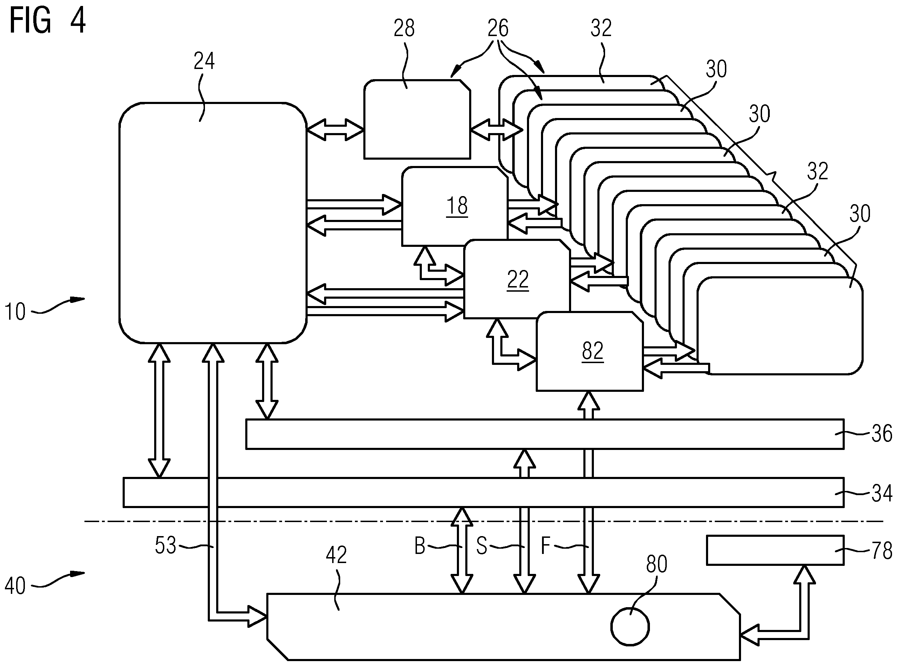

Die Interaktionen der stationären Steuereinheit 42 mit dem Schienenfahrzeug 10 und dessen realen Komponenten werden anhand der Figur 4 näher erläutert. In dieser sind die stationäre Steuereinheit 42, die zentrale Steuereinheit 24 des Schienenfahrzeugs 10 und die Datenverbindung 53 dargestellt. Außerdem sind ein Antriebssteuergerät 18, ein Bremssteuergerät 22 und eine Subsystemsteuereinheit 28 schematisch dargestellt. Das Datenbussystem 34 und eine Sicherungsschleife 36 sind ebenfalls gezeigt.

Die Subsystemsteuereinheiten 28, die Antriebssteuergeräte 18 und die Bremssteuergeräte 22 stehen datentechnisch einerseits in Wirkverbindung mit Fahrzeugkomponenten, welche insbesondere Sensoreinheiten 32, Aktoreinheiten 30 und Verdrahtungen entsprechen, und andererseits wie oben beschrieben in Wirkverbindung mit der zentralen Steuereinheit 24.

Die stationäre Steuereinheit 42 kann über die Datenverbindung 53 mit der zentralen Steuereinheit 24 Fahrzeugprozesse beeinflussen. Hierzu sind die stationäre Steuereinheit 42 und die zentrale Steuereinheit 24 dazu vorgesehen, im Zusammenwirken über die Datenverbindung 53 Steuerverbindungen herzustellen und zu betreiben. Dafür ist die stationäre Steuereinheit 42 - wie oben bereits beschrieben - mit der Software 80 ausgestattet. Diese entspricht einer realen Software, welche auf dem Schienenfahrzeug 10 installiert ist. Wie in Figur 4 mittels Pfeilen B und S gezeigt, welche jeweils einer Steuerverbindung bezeichnen, kann die stationäre Steuereinheit 42 einen Datenverkehr über das Datenbussystem 34 und auf der Tätigung einer Sicherungsschleife 36 basierte Prozesse beeinflussen.

Es werden nun weitere Testmodi der stationären Steuereinheit 42 beschrieben.

In einem Testmodus der stationären Steuereinheit 42 dient diese dazu, über die Datenverbindung 53 Sensordaten, die von zumindest einer Sensoreinheit 32 eines Subsystems 26 erfasst werden und z.B. in der Form von Diagnosedaten bereitgestellt werden können, für eine Speicherung und/oder eine Auswertung vom Schienenfahrzeug 10 herunterzuladen. Es erfolgt in diesem Fall ein Datenverkehr zwischen dem Schienenfahrzeug 10 und der stationären Steuereinheit 42, bei welchem die Sensordaten an diese übermittelt werden.

In einem weiteren Testmodus dient die stationäre Steuereinheit 42 dazu, zumindest einen bestimmten Fahrzeugprozess in einem Subsystem 26 - z.B. einen Prozess einer Aktoreinheit 30 desselben, in einer Antriebseinheit 14 und/oder einer Bremseinheit 20, 21 zu testen. Dabei kann der Fahrzeugprozess durch die stationäre Steuereinheit 42 gestartet, geändert, insbesondere gesteuert oder geregelt, oder beendet werden. Prozessdaten, die in Verbindung mit dem Fahrzeugprozess erzeugt werden, werden durch die stationäre Steuereinheit 42 für eine Speicherung und/oder eine Auswertung heruntergeladen. Es erfolgt in diesem Fall ein Datenverkehr zwischen dem Schienenfahrzeug 10 und der stationären Steuereinheit 42, bei welchem Steuerdaten von der Steuereinheit 42 ans Schienenfahrzeug 10 übertragen werden und erfasste Prozessdaten aus dem Schienenfahrzeug 10 an diese übermittelt werden.

Die weiter unten dargestellten Testmodi der stationären Steuereinheit 42 umfassen jeweils einen Datenverkehr der stationären Steuereinheit 42 mit dem Schienenfahrzeug 10 und mit der Simulationseinheit 56.

In einem Testmodus der stationären Steuereinheit 42 erfolgt eine Auswertung von Prozessdaten eines Fahrzeugprozesses des Schienenfahrzeugs 10 anhand von Simulationsdaten eines Simulationsprozesses der Simulationseinheit 56. Beispielsweise können wie oben beschrieben Sensordaten im Schienenfahrzeug 10 erfasst werden und an die Testzentrale 40 übertragen werden. Diese Sensordaten sind in einem besonderen Beispiel Daten einer Antriebseinheit 14, insbesondere eine Spannung, eine Antriebsleistung und eine Temperatur in einer Leistungsversorgungseinheit 17. Diese Sensordaten werden während eines Streckenbetriebs des Schienenfahrzeugs 10 erfasst. Die stationäre Steuereinheit 42 löst einen Simulationsprozess der Simulationseinheit 56 aus, in welchem die Temperatur einer in der Simulationseinheit 56 nachgebildeten Antriebseinheit bei gleichen Spannungs- und Leistungsbedingungen ermittelt wird. Die vom Fahrzeugprozess erfassten Prozessdaten, d.h. die Sensordaten, entsprechen einem Ist-Zustand beim Schienenfahrzeug 10 und die vom Simulationsprozess erzeugten Simulationsdaten werden einem Soll-Zustand beim Schienenfahrzeug 10 zugeordnet. Beim Vorliegen der Prozessdaten und der Simulationsdaten kann durch die stationäre Steuereinheit 42 ein Soll-Ist-Vergleich durchgeführt werden, wobei eine Abweichung einen Hinweis an einen Bediener der Steuereinheit 42 über die Ausgabeeinrichtung 46 und/oder an eine automatische Informationsbearbeitungseinheit auslöst.

In einem weiteren Testmodus der stationären Steuereinheit 42 erfolgt eine Änderung von Simulationsdaten der Simulationseinheit 56 anhand von Prozessdaten eines Fahrzeugprozesses des Schienenfahrzeugs 10. Dieser Testmodus kann insbesondere dazu dienen, Änderungen, die am Schienenfahrzeug 10 vorgenommen wurden, automatisch zu erfassen und in der Simulationseinheit 56 zu berücksichtigen. Es wird z.B. angenommen, dass im Schienenfahrzeug 10 eine Lüftungseinheit mit bestimmter Nennleistung durch eine andere Lüftungseinheit mit unterschiedlicher Nennleistung ersetzt wurde. Ein durch die stationäre Steuereinheit 42 ausgelöster Fahrzeugprozess erfasst, z.B. als Testbetrieb der Lüftungseinheit, die Nennleistung der Lüftungseinheit. Diese Prozessdaten werden in der Simulationseinheit 56 berücksichtigt, welche nach Vergleich mit einem bestehenden Wert den neuen Wert speichert. Dieser neue Wert wird dann bei einer den Betrieb der Lüftungseinheit betreffenden Simulation herangezogen. Dieser Testmodus kann des Weiteren dazu dienen, eine Wertänderung, die sich aufgrund einer Fehlfunktion der Lüftungseinheit ergibt, in der Simulationseinheit 56 zu berücksichtigen.

In einem weiteren Testmodus kann die Änderung von Simulationsdaten der Simulationseinheit 56 anhand von Prozessdaten des Schienenfahrzeugs 10 eine Anpassung von Daten in den Sätzen 74 von Daten umfassen, die zum rechnergestützten Entwicklungssystem 70 gehören. Wird z.B. im Schienenfahrzeug 10 ein neues Bauteil eingebaut, kann dies durch einen Fahrzeugprozess des Schienenfahrzeugs 10 erfasst werden. Entsprechende Prozessdaten, die dabei erzeugt werden, werden von der stationären Steuereinheit 42 ausgewertet, welche eine automatische Aktualisierung der entsprechenden Bauteilbibliothek des rechnergestützten Entwicklungssystems 70 und/oder eine automatische Anpassung von Schaltplandaten bewirkt.

In einem weiteren Testmodus der stationären Steuereinheit 42 erfolgt eine zumindest teilweise Beeinflussung eines Fahrzeugprozesses des Schienenfahrzeugs 10 anhand von Simulationsdaten eines Simulationsprozesses der Simulationseinheit 56. In diesem Modus kann ein Fahrzeugprozess durch die stationäre Steuereinheit 42 ausgelöst werden. Dies erfolgt auf der Grundlage von Simulationsdaten, die als Bedingungsparameter für den Fahrzeugprozess dienen. In einem besonderen Beispiel soll eine Funktion der Klimatisierungsanlage des Schienenfahrzeugs 10 getestet werden, wobei diese Funktion einer Regelung der Lüftungsleistung in Abhängigkeit der CO₂-Konzentration entspricht. Diese Anwendungssituation wird für einen bestimmten Konzentrationswert in einem Simulationsprozess der Simulationseinheit 56 nachgebildet, welcher als Simulationsdaten Inputparameter für den Fahrzeugprozess erzeugt. Diese Simulationsdaten werden von der stationären Steuereinheit 42 genutzt, um einen Betrieb der Klimatisierungsanlage gemäß dem betrachteten Konzentrationswert über die Datenverbindung 53 zu steuern. Wie oben beschrieben, verfügt die stationäre Steuereinheit 42 über eine Software, welche einer Version der Klimaregelungssoftware des Schienenfahrzeugs 10 entspricht. Der Betrieb der Klimatisierungsanlage als Fahrzeugprozess erzeugt Prozessdaten, insbesondere Sensordaten, welche von der stationären Steuereinheit 42 ausgewertet und insbesondere mit Simulationsdaten aus dem Simulationsprozess verglichen werden.

In einem weiteren Beispiel soll eine Rückfallebene der Leistungsverwaltung von Hilfsantrieben getestet werden, wenn ein Teil der Hilfsbetriebsversorgung ausfällt. Diese Anwendungssituation wird in einem Simulationsprozess der Simulationseinheit 56 nachgebildet, welcher als Simulationsdaten Inputparameter für den Fahrzeugprozess erzeugt. Diese Simulationsdaten werden von der stationären Steuereinheit 42 genutzt, um die entsprechende Regeleinheit der realen Leistungsverwaltung im Schienenfahrzeug 10 zu steuern. Der Betrieb der Leistungsverwaltung als Fahrzeugprozess erzeugt Prozessdaten, insbesondere Sensordaten, welche von der stationären Steuereinheit 42 ausgewertet und insbesondere mit Simulationsdaten aus dem Simulationsprozess verglichen werden. Dieses Beispiel entspricht dem Fall einer Fehlerinjektion, bei welcher ein fehlerhafter Zustand in einem Subsystem des Schienenfahrzeugs 10 künstlich erzeugt wird. Als weiteres Beispiel für eine Fehlerinjektion ist das Simulieren eines Kabelbruches möglich.

Bezüglich einer Fehlerinjektion bezüglich der Funktionalität der Bremseinrichtung kann - wie in Figur 4 gezeigt - im Schienenfahrzeug 10 eine spezielle Schnittstelle 82 implementiert sein, die über eine Steuerverbindung F mit der stationären Steuereinheit 42 in Wirkverbindung steht. Diese Schnittstelle 82 ist mit einem Bremssteuergerät 22 und einer Aktorik des Schienenfahrzeugs 10 verbunden.

Der oben beschriebene, einen Soll-Ist-Vergleich umfassenden Testmodus der stationären Steuereinheit 42 kann während eines Streckenbetriebs des Schienenfahrzeugs 10 ausgeführt werden. Wie oben bereits erörtert, kann eine Abweichung einen Hinweis an einen Bediener der Steuereinheit 42 über die Ausgabeeinrichtung 46 und/oder an eine automatische Informationsbearbeitungseinheit auslösen. Abhängig von dem Abweichungsgrad können verschiedene Maßnahmen getroffen werden, wie die Benachrichtigung an eine Bedienperson oder eine automatische Speicherung des Ereignisses für eine spätere Auswertung. Bestimmte, gravierende Abweichungen können sich durch Zustände des Schienenfahrzeugs 10 ergeben, welche gemäß einem normierten Personenschutz als unsicher gelten. Die Zuordnung bestimmter Abweichungen zu solchen unsicheren Zuständen ist in der stationären Steuereinheit 42 hinterlegt. Beim Erkennen eines bezüglich des Personenschutzes unsicheren Zustands des Schienenfahrzeugs 10 werden von der stationären Steuereinheit 42 Maßnahmen eingeleitet, um das Schienenfahrzeug 10 wieder in einen sicheren Zustand zu bringen. Kann kein sicherer Zustand durch Behebung eines erkannten Fehlers hergestellt werden, kann als Maßnahme eine Notbremsung des Schienenfahrzeugs 10 ausgelöst werden.

## Patentansprüche

1. Verfahren zur Ausführung eines Testvorgangs betreffend ein Schienenfahrzeug (10), bei welchem
- eine stationäre Steuereinheit (42) und eine Simulationseinheit (56) auf der Landseite bereitgestellt sind,
- eine Datenverbindung (53) zwischen der stationären Steuereinheit (42) und dem Schienenfahrzeug (10) hergestellt ist,
- eine Datenverbindung (57) zwischen der stationären Steuereinheit (42) und der Simulationseinheit (56) hergestellt ist,
- der Testvorgang einen Datenverkehr der stationären Steuereinheit (42) mit dem Schienenfahrzeug (10) und mit der Simulationseinheit (56) umfasst, **dadurch gekennzeichnet, dass**
- die Simulationseinheit (56) reale Fahrzeugkomponenten (60) und eine Simulationsumgebung aufweist, in welcher die Fahrzeugkomponenten (60) eingebettet sind, wobei Simulationskomponenten der Simulationsumgebung dazu dienen, die reale Umgebung der Fahrzeugkomponenten (60) im vom Schienenfahrzeug (10) gebildeten System nachzubilden, und
- Prozessdaten eines Fahrzeugprozesses, welche einen Ist-Zustand beim Schienenfahrzeug darstellen, an die stationäre Steuereinheit (42) übermittelt werden und die stationäre Steuereinheit (42) eine Auswertung der Prozessdaten anhand von Simulationsdaten eines Simulationsprozesses, welche einen Soll-Zustand beim Schienenfahrzeug darstellen, durchführt.

2. Verfahren nach Anspruch 1,
**dadurch gekennzeichnet, dass**
Prozessdaten eines Fahrzeugprozesses an die stationäre Steuereinheit (42) übermittelt werden und die stationäre Steuereinheit (42) eine Änderung von Simulationsdaten der Simulationseinheit (56) anhand der Prozessdaten bewirkt.

3. Verfahren nach Anspruch 1 oder 2,
**dadurch gekennzeichnet, dass**
die stationäre Steuereinheit (42) anhand von Simulationsdaten eines Simulationsprozesses wenigstens einen Fahrzeugprozess zumindest teilweise beeinflusst.

4. Verfahren nach Anspruch 3,
**dadurch gekennzeichnet, dass**
die Simulationsdaten zumindest einen Fehler im Schienenfahrzeug (10) nachbilden.

5. Verfahren nach einem der vorhergehenden Ansprüche,
**dadurch gekennzeichnet, dass**
die Simulationseinheit (56) Fahrzeugkomponenten (60) und eine Simulationsumgebung (62) aufweist, in welcher die Komponenten (60) eingebettet sind und die eine Schnittstelle (68) umfasst, über welche eine Datenkommunikation mit einem rechnergestützten Entwicklungssystem (70) hergestellt wird.

6. Verfahren nach Anspruch 5,
**dadurch gekennzeichnet, dass**
das rechnergestützte Entwicklungssystem (70) zumindest einen Datensatz (74) von Simulationsdaten aufweist aus der Gruppe: Schaltplandaten, Bauteilbibliotheken, Bibliothekdaten für ein Design-Programm.

7. Verfahren nach Anspruch 2 und 6,
**dadurch gekennzeichnet, dass**
die Änderung eine Anpassung des zumindest einen Datensatzes (74) anhand der Prozessdaten umfasst.

8. Verfahren nach einem der vorhergehenden Ansprüche,
**dadurch gekennzeichnet, dass**
der Testvorgang während eines Streckenbetriebs des Schienenfahrzeugs (10) ausgeführt wird.

9. Verfahren nach Anspruch 8,
**dadurch gekennzeichnet, dass**
durch den Testvorgang ein unsicherer Zustand des Schienenfahrzeugs (10) erkannt wird und das Schienenfahrzeug (10) in einen sicheren Zustand gebracht wird.

10. Verfahren nach Anspruch 9,
**dadurch gekennzeichnet, dass**
beim Vorliegen eines unsicheren Zustands eine Notbremsung des Schienenfahrzeugs (10) ausgelöst wird.

11. Vorrichtung zur Ausführung eines Testvorgangs betreffend ein Schienenfahrzeug (10),
mit einer stationären Steuereinheit (42), einer Simulationseinheit (56) und einer Datenschnittstelle (52), welche auf der Landseite bereitgestellt sind, wobei die stationäre Steuereinheit (42) mit der Simulationseinheit (56) datentechnisch in Wirkverbindung steht und dazu vorgesehen ist, über die Datenschnittstelle (52) eine Datenverbindung (53) mit dem Schienenfahrzeug (10) herzustellen und den Testvorgang auf der Grundlage eines Datenverkehrs mit dem Schienenfahrzeug (10) und mit der Simulationseinheit (56) auszuführen,
**dadurch gekennzeichnet, dass** die Simulationseinheit (56) reale Fahrzeugkomponenten (60) und eine Simulationsumgebung aufweist, in welcher die Fahrzeugkomponenten (60) eingebettet sind, wobei Simulationskomponenten der Simulationsumgebung dazu dienen, die reale Umgebung der Fahrzeugkomponenten (60) im vom Schienenfahrzeug (10) gebildeten System nachzubilden, und wobei Prozessdaten eines Fahrzeugprozesses, welche einen Ist-Zustand beim Schienenfahrzeug darstellen, an die stationäre Steuereinheit (42) übermittelt werden und die stationäre Steuereinheit (42) eine Auswertung der Prozessdaten anhand von Simulationsdaten eines Simulationsprozesses, welche einen Soll-Zustand beim Schienenfahrzeug darstellen, durchführt.

12. Vorrichtung nach Anspruch 11,
**dadurch gekennzeichnet, dass**
die stationäre Steuereinheit (42) dazu vorgesehen ist, Prozessdaten eines Fahrzeugprozesses des Schienenfahrzeugs (10) anhand von Simulationsdaten eines Simulationsprozesses der Simulationseinheit (56) auszuwerten.

13. Vorrichtung nach Anspruch 11 oder 12,
**dadurch gekennzeichnet, dass**
die stationäre Steuereinheit (42) dazu vorgesehen ist, anhand von Simulationsdaten eines Simulationsprozesses wenigstens einen Fahrzeugprozess zumindest teilweise zu beeinflussen.

## Claims

1. Method for carrying out a test process relating to a rail vehicle (10) in which
- a stationary control unit (42) and a simulation unit (56) are provided on the land side,
- a data connection (53) is established between the stationary control unit (42) and the rail vehicle (10),
- a data connection (57) is established between the stationary control unit (42) and the simulation unit (56),
- the test process comprises data traffic of the stationary control unit (42) with the rail vehicle (10) and the simulation unit (56), **characterised in that**
- the simulation unit (56) has real vehicle components (60) and a simulation environment in which the vehicle components (60) are embedded, wherein simulation components of the simulation environment are used to reproduce the real environment of the vehicle components (60) in the system formed by the rail vehicle (10), and
- process data of a vehicle process, which represents an actual condition of the rail vehicle, is transferred to the stationary control unit (42) and the stationary control unit (42) performs an assessment of the process data on the basis of simulation data of a simulation process, which represents a target condition of the rail vehicle.

2. Method according to claim 1,
**characterised in that**
process data of a vehicle process is transferred to the stationary control unit (42) and the stationary control unit (42) effects a change in simulation data of the simulation unit (56) on the basis of the process data.

3. Method according to claim 1 or 2, **characterised in that** the stationary control unit (42) influences at least one vehicle process at least partially on the basis of simulation data of a simulation process.

4. Method according to claim 3,
**characterised in that**
the simulation data reproduces at least one fault in the rail vehicle (10).

5. Method according to one of the preceding claims,
**characterised in that**
the simulation unit (56) has vehicle components (60) and a simulation environment (62) in which the components (60) are embedded and which comprises an interface (68) by way of which data communication with a computer-aided development system (70) is established.

6. Method according to claim 5,
**characterised in that**
the computer-aided development system (70) has at least one data set (74) of simulation data from the group: circuit diagram data, component libraries and library data for a design program.

7. Method according to claim 2 and 6,
**characterised in that**
the change comprises an adjustment of the at least one data set (74) on the basis of the process data.

8. Method according to one of the preceding claims,
**characterised in that**
the test process is performed during a line operation of the rail vehicle (10).

9. Method according to claim 8,
**characterised in that**
an unsafe condition of the rail vehicle (10) is detected by means of the test process and the rail vehicle (10) is restored to a safe condition.

10. Method according to claim 9, **characterised in that** emergency braking of the rail vehicle (10) is triggered in the event of an unsafe condition.

11. Device for carrying out a test process relating to a rail vehicle (10),
with a stationary control unit (42), a simulation unit (56) and a data interface (52) which are provided on the land side, wherein the stationary control unit (42) is operatively connected to the simulation unit (56) in terms of data and is designed to establish a data connection (53) with the rail vehicle (10) by way of the data interface (52) and to perform the test process on the basis of data traffic with the rail vehicle (10) and with the simulation unit (56), **characterised in that**
the simulation unit (56) has real vehicle components (60) and a simulation environment, in which the vehicle components (60) are embedded, wherein simulation components of the simulation environment are used to reproduce the real environment of the vehicle components (60) in the system formed by the rail vehicle (10), and wherein process data of a vehicle process, which represents an actual condition of the rail vehicle, is transmitted to the stationary control unit (42) and the stationary control unit (42) carries out an evaluation of the process data on the basis of simulation data of a simulation process, which represents a target condition of the rail vehicle.

12. Device according to claim 11,
**characterised in that**
the stationary control unit (42) is provided to evaluate process data of a vehicle process of the rail vehicle (10) on the basis of simulation data of a simulation process of the simulation unit (56) .

13. Device according to claim 11 or 12,
**characterised in that**
the stationary control unit (42) is provided to influence at least one vehicle process at least partially on the basis of simulation data of a simulation process.

## Revendications

1. Procédé de mise en œuvre d'une opération de test concernant un véhicule (10) ferroviaire, dans lequel
- on se procure une unité (42) de commande fixe et une unité (56) de simulation du côté de la terre,
- on ménage une liaison (53) de données entre l'unité (42) de commande fixe et le véhicule (10) ferroviaire,
- on ménage une liaison (57) de données entre l'unité (42) de commande fixe et l'unité (56) de simulation,
- l'opération de test comprend une circulation de données de l'unité (42) de commande fixe avec le véhicule (10) ferroviaire et avec l'unité (56) de simulation, **caractérisé en ce que**
- l'unité (56) de simulation a des composants (60) réels du véhicule et un environnement de simulation, dans lequel les composants (60) du véhicule sont incorporés, des composants de simulation de l'environnement de simulation servant à reproduire l'environnement réel des composants (60) du véhicule dans le système formé par le véhicule (10) ferroviaire, et
- on transmet des données d'un processus de véhicule, qui représentent un état réel pour le véhicule ferroviaire, à l'unité (42) de commande fixe et l'unité (42) de commande fixe effectue une exploitation des données de processus à l'aide de données de simulation d'un processus de simulation, qui représentent un état de consigne pour le véhicule ferroviaire.

2. Procédé suivant la revendication 1,
**caractérisé en ce que**
on transmet des données d'un processus du véhicule à l'unité (42) de commande fixe et l'unité (42) de commande fixe provoque une modification de données de simulation de l'unité (56) de simulation à l'aide des données de processus.

3. Procédé suivant la revendication 1 ou 2,
**caractérisé en ce que**
l'unité (42) de commande fixe influe, au moins en partie, sur au moins un processus du véhicule, à l'aide de données de simulation d'un processus de simulation.

4. Procédé suivant la revendication 3,
**caractérisé en ce que**
les données de simulation simulent au moins un défaut du véhicule (10) ferroviaire.

5. Procédé suivant l'une des revendications précédentes,
**caractérisé en ce que**
l'unité (56) de simulation a des composants (60) de véhicule et un environnement (62) de simulation, dans lequel les composants (60) sont incorporés et qui comprend une interface (68), par laquelle une communication de données est ménagée avec un système (70) de développement assisté par ordinateur.

6. Procédé suivant la revendication 5,
**caractérisé en ce que**
le système (70) de développement assisté par ordinateur a au moins un jeu (74) de données de simulation choisi dans le groupe : données de schéma de circuit, bibliothèque de pièces, données de bibliothèque pour un programme de design.

7. Procédé suivant la revendication 2 et 6,
**caractérisé en ce que**
la variation comprend une adaptation du au moins un jeu (74) de données à l'aide des données de processus.

8. Procédé suivant l'une des revendications précédentes, **caractérisé en ce que**
l'on effectue l'opération de test pendant un fonctionnement sur voie du véhicule (10) ferroviaire.

9. Procédé suivant la revendication 8,
**caractérisé en ce que**
l'on reconnaît, par l'opération de test, un état qui n'est pas sûr du véhicule (10) ferroviaire et on met le véhicule (10) ferroviaire dans un état sûr.

10. Procédé suivant la revendication 9,
**caractérisé en ce qu'**
en présence d'un état qui n'est pas sûr, on déclenche un freinage d'urgence du véhicule (10) ferroviaire.

11. Système de mise en œuvre d'une opération de test concernant un véhicule (10) ferroviaire,
comprenant une unité (42) de commande fixe, une unité (56) de simulation et une interface (52) de données, qui sont mises à disposition du côté de la terre, dans lequel l'unité (42) de commande fixe est en liaison active du point de vue de la technique des données avec l'unité (56) de simulation et est prévue pour donner, par l'intermédiaire de l'interface (52) de données, une liaison (53) de données avec le véhicule (10) ferroviaire et pour effectuer l'opération de test sur la base d'une circulation de données avec le véhicule (10) ferroviaire et avec l'unité (56) de simulation, **caractérisé en ce que**
l'unité (56) de simulation a des composants (60) réels de véhicule et un environnement de simulation, dans lequel les composants (60) de véhicule sont incorporés, des composants de simulation de l'environnement de simulation servant à reproduire l'environnement réel des composants (60) de véhicule dans le système formé par le véhicule (10) ferroviaire, et dans lequel on transmet des données d'un processus de véhicule, qui représentent un état réel pour le véhicule ferroviaire, à l'unité (42) de commande fixe et l'unité (42) de commande fixe effectue une exploitation des données de processus à l'aide de données de simulation d'un processus de simulation, qui représentent un état de consigne pour le véhicule ferroviaire.

12. Système suivant la revendication 11,
**caractérisé en ce que**
l'unité (42) de commande fixe est prévue pour exploiter des données d'un processus du véhicule (10) ferroviaire à l'aide de données de simulation d'un processus de simulation de l'unité (56) de simulation.

13. Système suivant la revendication 11 ou 12,
**caractérisé en ce que**
l'unité (42) de commande fixe est prévue pour influencer, au moins en partie, au moins un processus du véhicule à l'aide de données de simulation d'un processus de simulation.
